Europäisches Patentamt

(19) European Patent Office

Office européen des brevets

(11) Publication number: **0 352 969**
**A2**

(12) **EUROPEAN PATENT APPLICATION**

(21) Application number: **89307382.5**

(22) Date of filing: **20.07.89**

(51) Int. Cl.⁴: **H01F 27/28**

(30) Priority: **29.07.88 US 226166**

(43) Date of publication of application:
**31.01.90 Bulletin 90/05**

(84) Designated Contracting States:
**DE FR GB**

(71) Applicant: **International Business Machines Corporation**
**Old Orchard Road**
**Armonk, N.Y. 10504(US)**

(72) Inventor: **Spreen, James Harold**
**R.D. 2, Box 52N Cedar Ridge Road**
**Stone Ridge New York 12484(US)**

(74) Representative: **Atchley, Martin John Waldegrave**
**IBM United Kingdom Limited Intellectual Property Department Hursley Park**
**Winchester Hampshire SO21 2JN(GB)**

(54) **Plank and frame transformer.**

(57) The present invention relates to a transformer comprising a core structure having at least two spaced apart pole pieces (20, 34; 22, 36) and forming a flux path, a primary winding structure, and a secondary winding structure (30, 40).

According to the invention the transformer is characterised in that the secondary winding structure comprises two generally planar electrically conductive winding portions (30, 40) connected together by at least one rectifier unit (D1, D2, D3, D4), a first one (30) of the conductive winding portions extending adjacent to the pole pieces and located outside the core, and the second one (40) of the conductive winding portions extending through the space between the pole pieces.

FIG.1

## PLANK AND FRAME TRANSFORMER

This invention relates to designs of electrical transformers for tight electrical coupling, improved heat dissipation, and ease of assembly.

Transformer designs are known which employ sheet-form or ribbon-like windings in an effort to capitalise on the economies available through use of so called "printed circuit" techniques. Such printed circuit transformers, although fabricated from sheet-form elements, usually strive to replicate, in printed circuit form, traditional winding patterns, including multi-turn secondary windings on traditional magnetic core structures.

The object of the present invention is to provide an improved design of transformer which provides improved current capacity, heat dissipation, and ease of assembly of the components of the transformer.

The present invention relates to a transformer comprising a core structure having at least two spaced apart pole pieces and forming a flux path, a primary winding structure, and a secondary winding structure.

According to the invention the transformer is characterised in that the secondary winding structure comprises two generally planar electrically conductive winding portions connected together by at least one rectifier unit, a first one of the conductive winding portions extending adjacent to the pole pieces and located outside the core, and the second one of the conductive winding portions extending through the space between the pole pieces.

In order that the invention may be more readily understood, embodiments will now be described with reference to the accompanying drawings, in which:

Fig. 1 is an exploded view of the structure of a transformer,

Fig. 2 is a plan view of the secondary winding portion of a modification of the structure of the transformer of Fig. 1,

Fig. 3 is an electrical diagram corresponding to a power supply unit including a transformer as depicted in Figs. 1 or 2,

Fig. 4 is an exploded isometric view of another modification of the structure of the transformer of Fig. 1,

Figs. 5(a) and 5(b) are, respectively, an electrical schematic and a corresponding timing diagram illustrative of the operation of the transformer of Fig. 4,

Fig. 6 is an exploded, partly schematic illustration, of a still further modification of the structure of the transformer of Fig. 1,

Fig. 7 is an enlarged fragmentary cross sectional view of the transformer illustrated in Fig. 6 taken along line 7-7 of Fig. 6,

Fig. 8 is an exploded view illustrating yet another modification of the structure of the transformer of Fig. 1, and

Figs. 9 and 10 show a detail of a suitable alternative diode mount for the diode chips utilised in the structures of Figs. 1 and 4, Fig. 10 being a cross-sectional view taken on line 10-10 of Fig. 9.

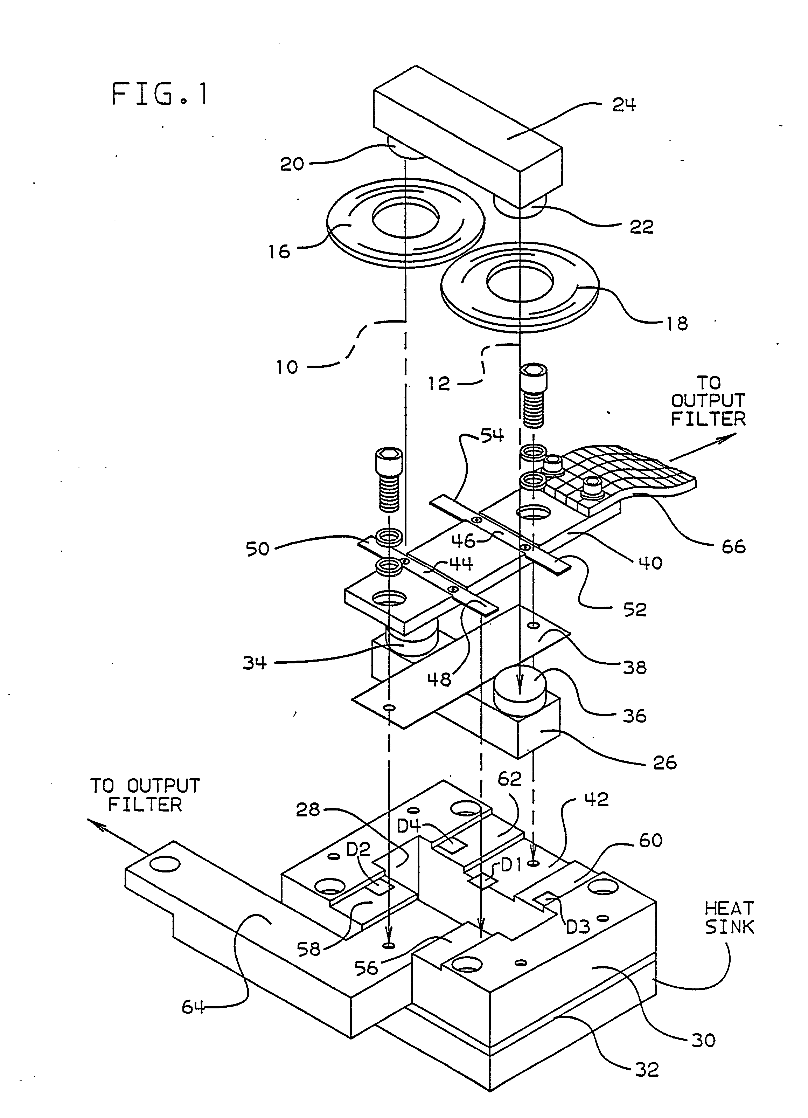

A transformer structure is shown in exploded view of Fig. 1 and is assembled as indicated by the reference lines 10, 12 shown in that figure, so that in a primary winding portion, primary windings 16, 18 fit over pole portions 20, 22 of an upper ferrite core element 24. In a secondary winding portion, a lower ferrite core element 26 is received in a pocket 28 formed by an aperture in a conducting frame 30 and a bottom frame closure plate 32. The lower core element 26 has pole portions 34, 36 which mate with the pole portions 20, 22 of the upper core element 24 and embrace an insulating spacer 38 and a conductive plank 40 forming a secondary winding. In the embodiment shown in Fig. 1, the pole portions 20, 22, 34, 36 give the core elements 24 and 26 respective C-shapes.

Frame 30 has a trough portion 42 adapted to receive the insulating spacer 38 and the lower portion of the plank 40. Plank 40 carries connection rails 44, 46 extending transversely therefrom and adapted to be positioned at opposite sides of the core structure formed by core elements 24 and 26 when the structure is assembled. The rails 44, 46 end in resilient connection tabs 48, 50 and 52, 54 which are adapted to bear upon diode chips D1, D2, D3, and D4 positioned on frame 30. Diode chips D1 and D2 are arranged to be interposed respectively between connection tabs 48 and 50 and connection lands 56, 58 machined or otherwise formed in the top surface of frame 30, and diodes D3 and D4 are interposed respectively between connection tabs 52, 54 and connection lands 60, 62 in the upper surface of frame 30. In the embodiment shown in the figure, a conductive arm 64 extends from one side of frame 30, and the plank 40 extends beyond the other side of frame 30 when assembled in position and has attached thereto a braid connector 66.

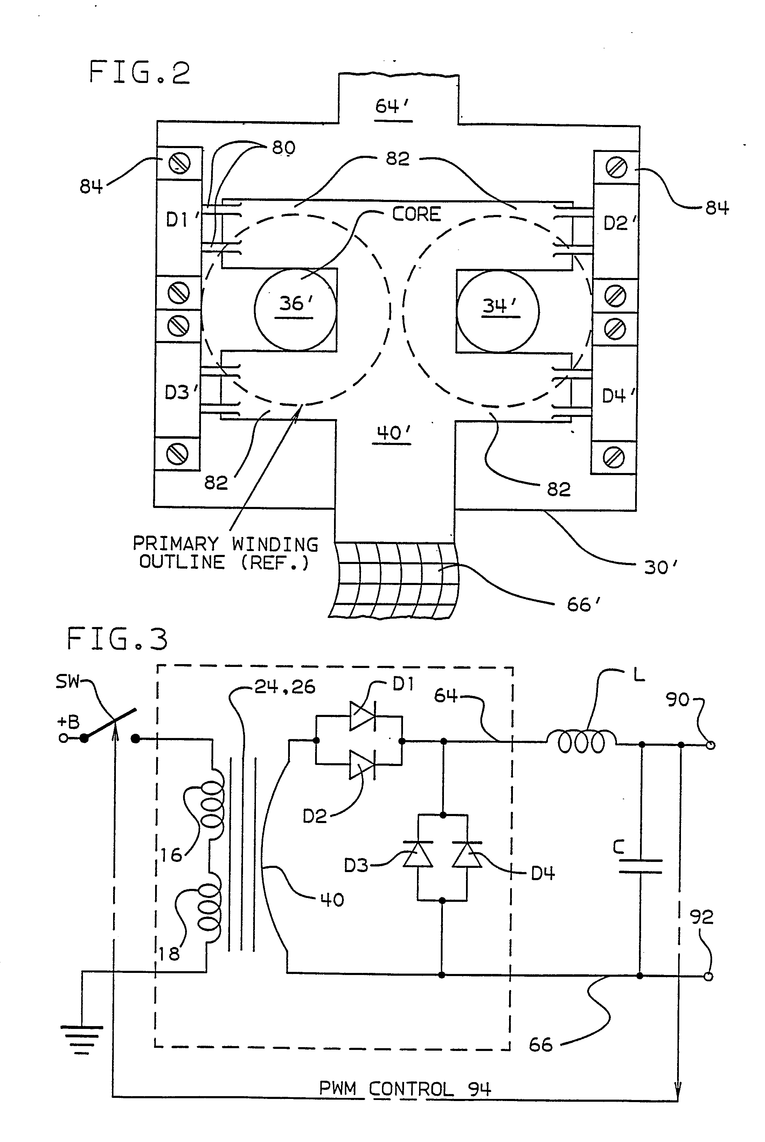

The transformer structure thus described can be used as a component in a singled ended, pulse driven forward power supply unit as will be described with reference to Fig. 3 hereinafter, with the conductive arm 64 providing one output connection to a filter in the power supply unit and the braid 66 providing the other output connection to the filter, and with the diodes D1 and D2 acting in parallel as a rectifier diode in the power supply and the diodes D3 and D4 acting in parallel as a free wheeling diode in the power supply.

When assembled, the ferrite core elements 24, 30, with their pole portions 20, 22 and 34, 36 form a core for the transformer with a single, continuous loop flux path. The two primary windings 16, 18 of the transformer are in one plane, with one primary winding on each leg of the core. These primary windings may be wired in series, as illustrated in the electrical schematic of Fig. 3, or in parallel. The secondary winding structure includes the continuous conducting frame 30 encircling the entire lower ferrite core element 26. The secondary winding plank conductor 40 passes through the aperture in the core formed between the pole portions. The plank 40 makes electrical connection to the frame 30 through the rectifier diodes D1 - D4.

Fig. 2 shows a variation of the structure of Fig. 1 in which diodes D1' - D4' are placed outside all of the windings instead of being embedded within the magnetic influence of the windings as in the structure illustrated in Fig. 1. This allows the use of prepackaged diode modules at the expense of possibly reduced magnetic coupling, and thus degraded performance. In the embodiment of Fig. 2 the diodes D1' -D4' are connected by solder or by attached leads 80 to lateral extensions 82 of a secondary winding plank conductor 40' thereby connecting one side of each diode (in this case the anode side) to that plank conductor, and by connection tabs 84 connecting the other side of the diode (in this case the cathode side) to a frame element 30'. The other elements of the embodiment illustrated in Fig. 2, including parts not seen in Fig. 2, may be substantially identical to those of the embodiment of Fig. 1, and the operation as described with reference to Fig. 3 would be the same.

Fig. 3 shows a schematic electrical diagram representative of the operation of a power supply unit including a transformer having a structure as illustrated in Fig. 1 and equally applicable to a transformer having a structure as illustrated in Fig. 2. In the electrical diagram of Fig. 3, the transformer structure is shown in terms of the primary windings 16, 18, the secondary "plank" winding 40, the core elements 24, 26 (which of course include their mating pole portions, 20, 22, 34, 36), and the diodes D1, D2 and D3, D4, all as they relate electrically to the outputs 64, 66. Thus, the reference numbering scheme of Fig. 3 corresponds to that of Fig. 1 and Fig. 2. In the embodiment of Fig. 3 , the output (conductive arm) 64 is connected through a filter inductor L to one side of a filter capacitor C and to one output terminal 90 of the power supply unit. The other output terminal 92 is connected to the return side constituted via the braid connector 66 then to the other end of the secondary or plank conductor 40.

Typically, such a power supply unit is powered by a DC voltage source +B which is connected to the primary windings 16, 18 by a transistor or other suitable switch SW, under the control of a feedback circuit 94, typically a pulse-width modulation (PWM) control which opens and closes the switch SW in accordance with a duty cycle (usually a variable duration pulse of fixed frequency) in a manner to maintain the output potential across terminals 90, 92 constant, all as is well understood in the art.

It will be understood that the transformer structure of Fig. 1, and its variant of Fig. 2, can be employed in a multitude of circuits other than that shown in Fig. 3, the circuit of Fig. 3 being exemplary of one employment only.

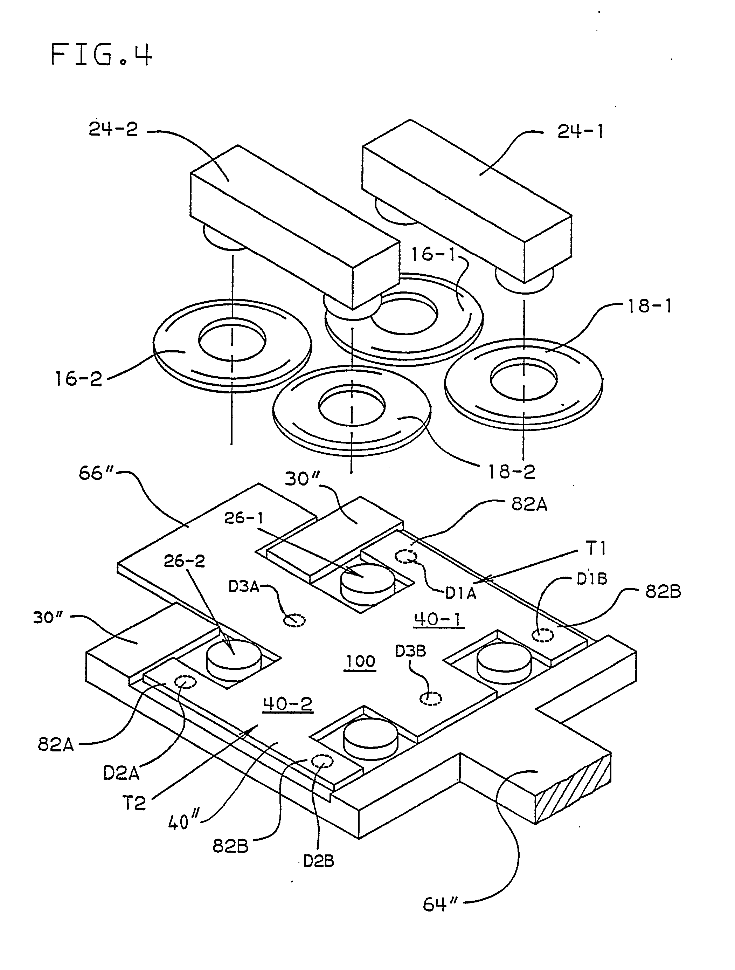

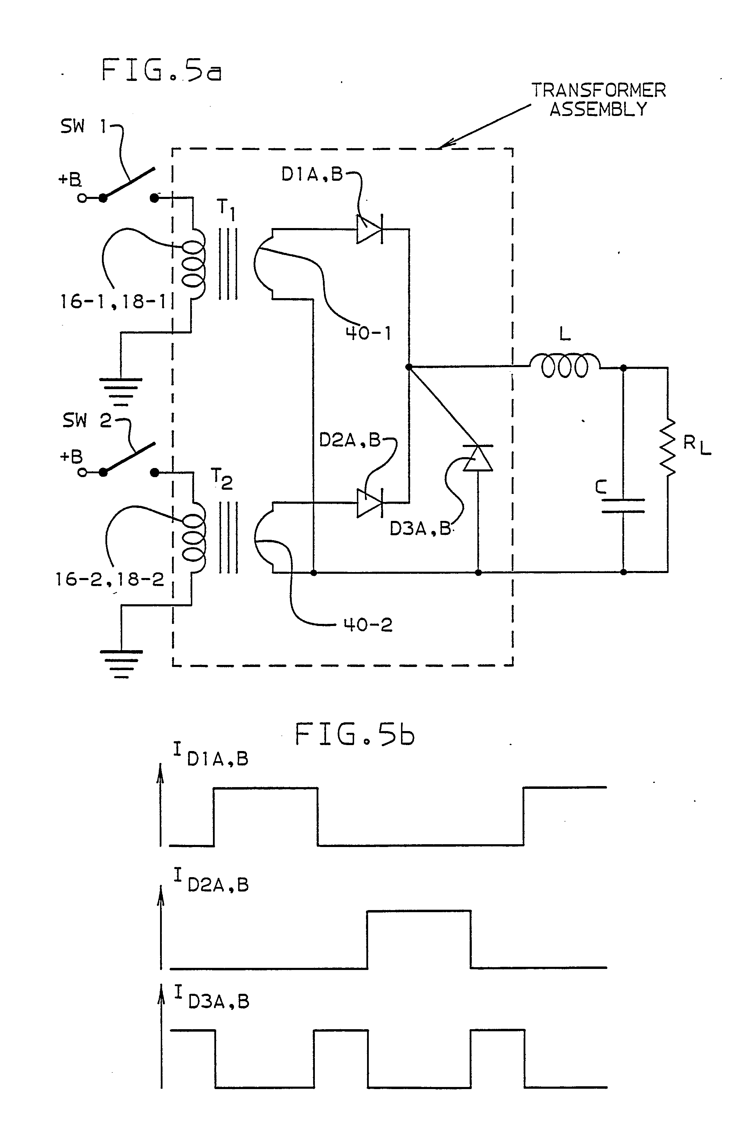

Fig. 4 shows another form of transformer structure having a configuration especially useful for anti-phase operation, such as in a high-frequency, high-current switch mode DC - DC power converter unit which uses dual power trains with anti-phase switching. The general concept of such operation is discussed in an article in the IBM Technical Disclosure Bulletin, August 1982, pages 1426-27, by L. B. Carroll, and the operation of one embodiment will be discussed further with reference to Fig. 5 hereinbelow.

Fig. 4 shows, in exploded view, the various levels of the structure of the transformer. The base level includes a conductive frame 30" formed with cavities to receive bottom portions 26-1 and 26-2 of the pole portions of each of two ferrite cores 24-1, 24-2. The secondary winding of the transformer is provided by a conductive plank 40" having portions 40-1 and 40-2 passing through the gaps between the pairs of pole portions. The medial portion 100 of the plank 40" connects the inner end of each of the two plank portions 40-1 and 40-2, in common, to a free-wheeling diode pair D3A and D3B and thence to the frame 30". The diodes D3A and D3B act in parallel to provide a distributed current path, having anodes in contact with the underside portion 100 of the plank 40" and cathodes in contact with the underlying conductive frame 30" at spaced positions as shown. In like manner resilient outer ends 82A, 828 of the plank portions 40-1 and 40-2 are connected via rectifier diodes D1A, D1B and D2A, D2B, respectively, to the underlying frame 30". Thus, a current path can be traced from the connection tab 66" of the plank 40" to the medial portion 100 between plank portions 40-1, 40-2, where it not only makes connection via diodes D3A and D3B to the frame 30", but also splits to pass through the gaps between the pairs of pole pieces of the cores 24-1, 24-2, one branch extending through plank portion 40-1 to the diodes of D1A and D1B, and the other branch through plank portion 40-2 to the diodes D2A and D2B. The transformer illustrated forms two independent transformers T1 and T2. Diode pair D1A and D1B form the rectifier diode for one transformer T1 and diode pair D2A and D2B form the rectifier diode for the other transformer T2, with diode pair D3A, D3B forming a free-wheeled diode serving in common both transformers T1, T2.

The upper portion of the transformer structure illustrated in Fig. 4 consists of primary windings 16-1, 18-1, 16-2, 18-2 and the top portions of the cores 24-1, 24-2. When the structure is assembled, the pole pieces in the top portions of the cores combine with the bottom portions of the pole pieces 26-1, 26-2 to form the two independent transformers T1 and T2 with respective magnetic flux paths formed by the two cores 24-1, 24-2. The pole pieces of each core are encircled by the primary winding of one of the transformers T1, T2, each primary winding being in the form of a pair of two planar spiral windings (16-1, 18-1; 16-2, 18-2). All four primary windings are in one plane.

The primary windings of each transformer T1, T2 may be connected in series as shown in Fig 5-(a) or in parallel. Fig. 5(a) shows in diagrammatic form the electrical circuit of a power supply unit incorporating a transformer having a structure as illustrated in Fig. 4, and Fig. 5(b) shows the corresponding idealised diode conduction timings. In these figures, the parallel diodes D1A, D1B, etc. are shown as equivalent single diodes D1A,B, etc. The two separate power transformers T1 and T2 are powered on the primary side by separate single ended converter circuits through primary switches SW1 and SW2. Staggered timing of the ON time of the primary switches SW1 and SW2 ensures that the forward output rectifiers D1A,B and D2A,B conduct in "anti-phase" as shown in Fig. 5 (b) rather than with any overlap of conduction times. The input to the filter (L, C) therefore oscillates at twice the frequency of the fundamental switching frequency of the primary switches SW1, SW2, thus reducing the filtering required.

The transformer structure illustrated in Fig. 4 combines transformers T1 and T2 and rectifiers D1A,B - D3A,B in a single structure as shown in Fig. 4 thereby providing improved electrical performance. During the OFF to ON switch transition of either T1 or T2, the output current flowing in the free wheel rectifier D3A,B is commutated by D1A,B or D2A,B.

By incorporating T1; T2; D1A,B; D2A,B; and D3A,B in a common structure with appropriately designed shared electrical connections and induced current paths, the time required for current commutation is reduced. Reduced commutation time results in improved performance of the power supply unit in which the transformer structure is incorporated. As in the basic transformer structures illustrated in Figs. 1 and 2, the structure illustrated in Fig. 4 provides mechanical and cooling advantages and, in addition, produces a "bridge-like" double frequency input to the filter while retaining single-ended circuitry and components.

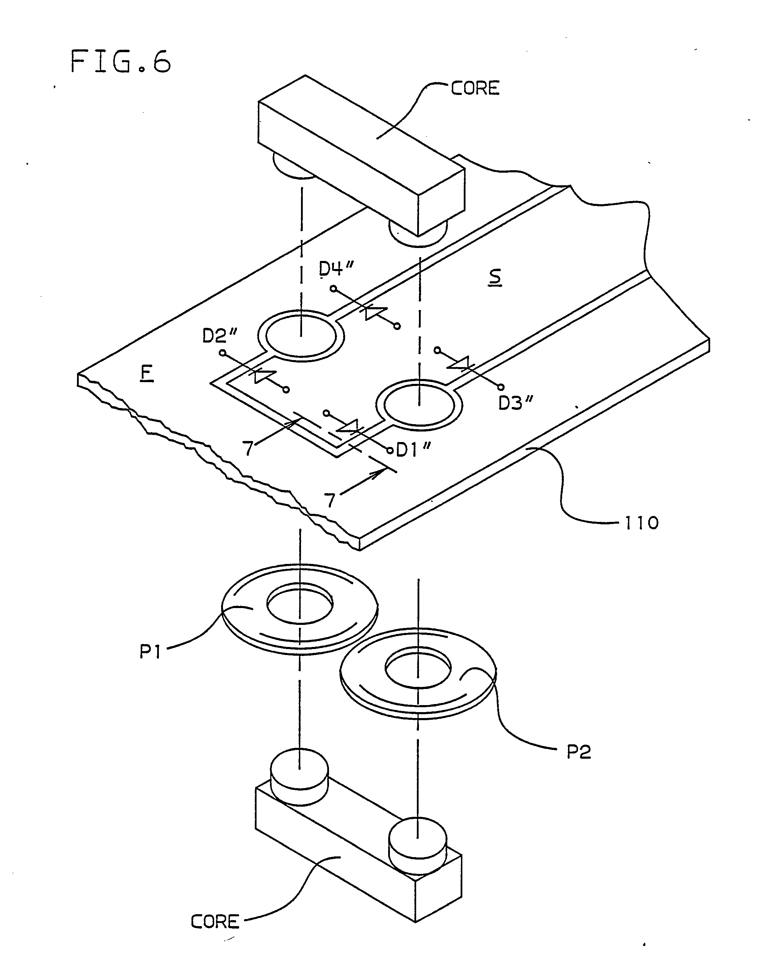

Fig. 6 shows still another form of transformer structure and in this case the frame of the case is wrapped around one end of the plank of the secondary winding and is coplanar therewith rather than overlying the same.

As shown in Fig. 6, the secondary winding structure consists of only two areas of conductor on a printed circuit card 110, a secondary winding S and a core frame portion F. Conductive area S extends through the gap between the pole pieces of the core and provides one connection to the output filter (L, C) as shown diagrammatically in Fig. 3. Conductive area F occupies the area which is positioned under the primary windings P1 and P2 when the transformer is assembled and provides the other connection to the output filter. The conductive areas S and F are electrically connected through output rectifiers D1$''$, D2$''$, D3$''$, and D4$''$ whose positions are shown schematically in Fig. 6 . Diodes D1$''$ and D2$''$ function as a forward rectifier in a forward converter while diodes D3$''$ and D4$''$ function as a free-wheel rectifier, in the same manner as the similarly numbered diodes in the structure illustrated in Fig. 1. Accordingly, the electrical schematic diagram for Fig. 6 would be the same as that for Fig. 1, which is already shown in Fig. 3 and need not be repeated.

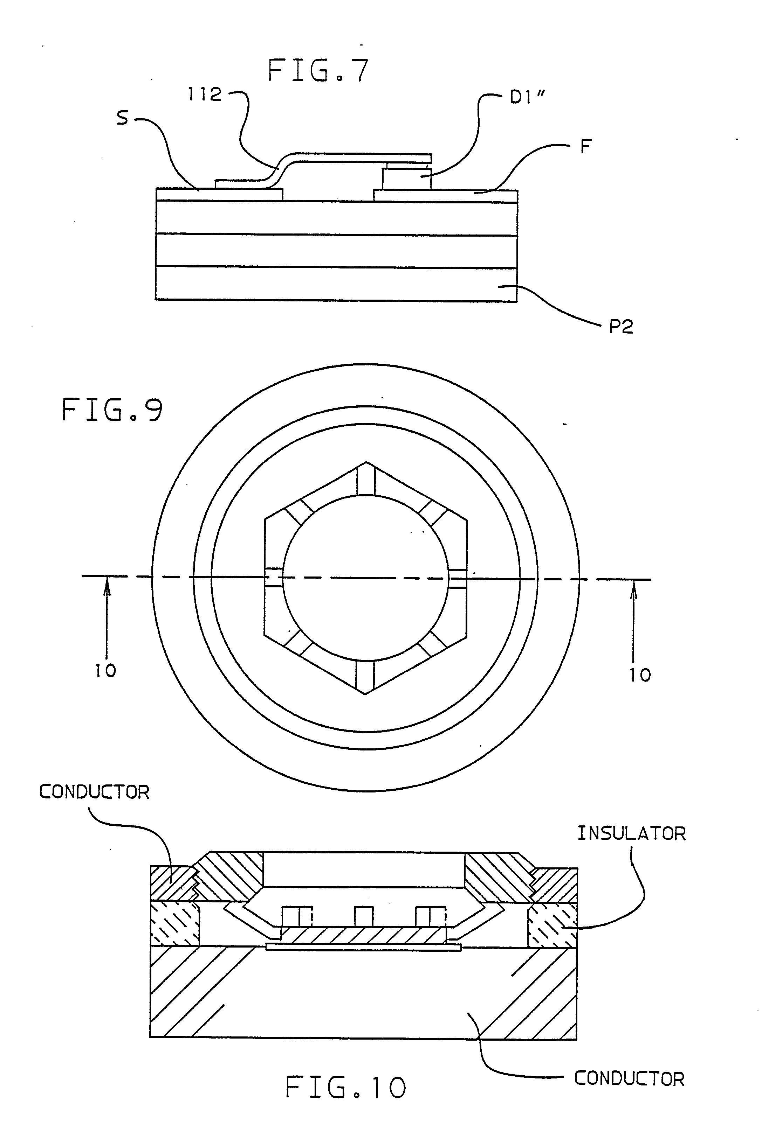

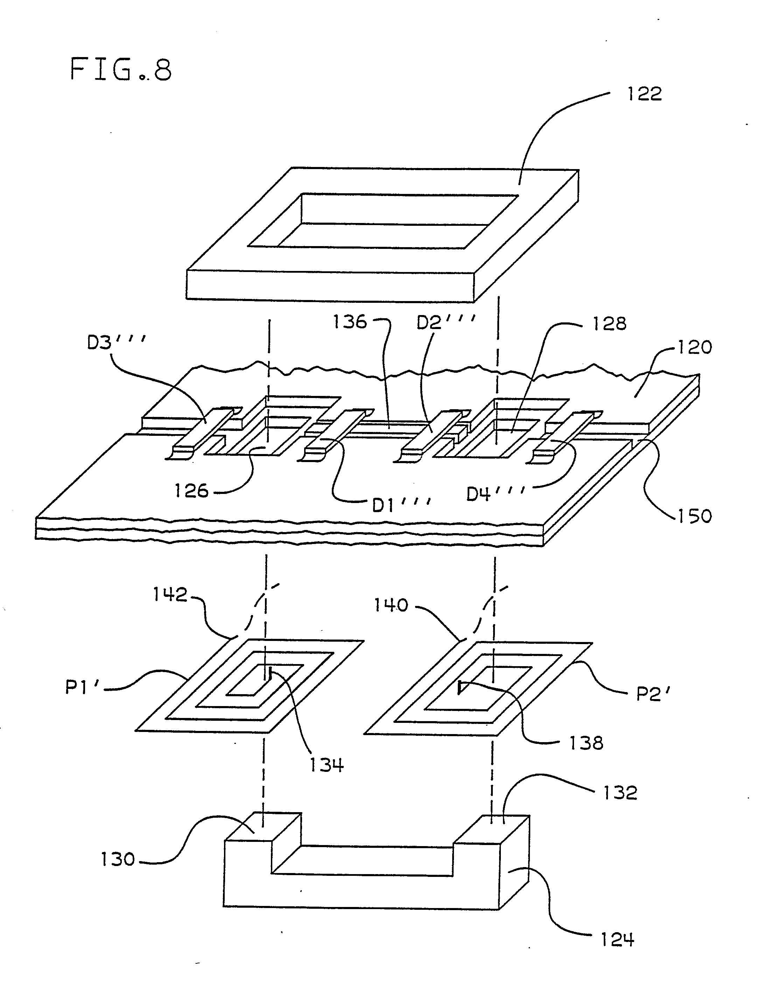

However, in the structure illustrated in Fig. 6, the primary windings, P1 and P2, are on the opposite side of the printed circuit card 110 to that on which conductive areas S and F are formed, so that mechanical interference between the primary windings and the diode rectifiers is avoided. The actual structure of each diode mount can be formed conveniently by means of a conductor bridge 112 as illustrated in Fig. 7, or, if desired, a diode package having axial leads could be surface mounted in the same position.

Fig. 8 shows a single printed card structure for a transformer wherein all the necessary conductors may be fabricated on one double-sided printed circuit card 120, thus providing a high performance, low cost, easily assembled transformer for high frequency switch mode DC -DC power converters.

In the figure, the secondary winding structure side of the card 120 is visible. Ferrite core members 122 and 124 are assembled with their pole positions 130, 132 extending through holes 126, 128 in the card 120, as indicated, forming a single core providing a continuous loop for a flux path. A primary winding is fabricated as two separate planar spiral primary coils P1$'$ and P2$'$. Although shown spaced from the card 120 in the exploded view, they are actually formed in place or otherwise attached as part of the underside of the card. Each of these coils encircles a respective pole position 130, 132 of the assembled core. The innermost turn of P1' is connected to the innermost turn of P2' through a connector 134 which projects through the card, a link 136 on the other side of the card, and a second connector 138 which projects back to the underside side of the card. Thus, the primary coils P1', P2' are wired in series forming the complete primary winding. The two primary winding connections 140, 142 required between the inverter primary circuit and the primary winding are made, one each, to the outermost turn of each coil, P1', P2'.

The structure illustrated in Fig. 8 includes still another modified aspect in that the secondary winding structure consists of a two part portion of the conductive surface of the card extending through the space between the pole pieces of the core. A gap 150 extending through the conductive surface so as to form the two part portion is bridged by rectifier diodes D1" and D2" in that secondary winding portion, while free-wheeling diodes D3'" and D4'" bridge the gap in the portion outside the core. Moreover, in order to allow a low profile while avoiding interference with the diodes D1'", D2'", one of the core elements 122 is formed in a frame configuration so as to have a central aperture for receiving the diodes D2'", D3'".

In the modified embodiment of Fig. 8, all wiring, including primary winding circuit connections, primary windings, secondary winding conductors, rectifier connections and output filter connections may be fabricated in one double-sided printed circuit card 120. The rectifier positions are fully accessible for surface mounting of the rectifiers. The core pieces 122, 124 drop into place forming a magnetic flux path through holes 126, 128 in the card. Since the core pieces and the rectifiers may be positioned as shown to avoid mechanical interference with no degradation of electrical performance, the structure is well suited for applications requiring compact power circuits. The height is the sum of the height of the lower core piece, the card thickness, plus the height of the upper core piece or the rectifier, whichever is greater.

In each of the structures shown in Figs. 1, 4, 6 and 8, the diodes are located within the winding structure, for minimum inductance. During the operation of a forward converter, such as shown schematically in Fig. 3 or Fig. 5(a), it is necessary to commutate quickly the inductor L currents (approximately the output currents) from the free-wheeling diodes (D3, D4 in Fig. 3 and D3A,B in Fig. 5(a)) to the secondary windings (40 in Fig. 3 and 40-1, 40-2 in Fig. 5(a)) and the rectifying diodes (D1, D2 in Fig. 3 and D1A,B, D3A,B in Fig. 5(a)). This transfer of current occurs when the single switch SW in Fig. 3 or either of the switches SW-1, SW-2 in Fig. 5(a) turns ON. A similar commutation of the current from the rectifying diodes back to the free-wheeling diodes occurs when the switch turns OFF. Any inductance in the circuit loop of any secondary winding and diode pair increases these commutation times. Such inductance may be due to actual lead inductance or to the leakage inductance (lack of perfect magnetic coupling) of the respective power transformer. By positioning the diodes inside the planar winding structure so that the geometry of the commutation current loops matches the geometry of the primary windings, the loop inductance can be minimised. In the structure of Figs. 1 and 4 the diodes are implemented as single chip devices pressured by the resilient portions 48, 50, 52, 54, 82A, 82B. As an alternative, they could be embodied as shown for example in Figs. 9 and 10. Further description of this kind of device is given an article entitled "Low Inductance Chip Connector for Power Rectifiers" published in the IBM Technical Disclosure Bulletin, Vol. 29, No. 3 (August, 1986) pages 1071-1072.

In each of the embodiments of the invention described in detail above, there is provided a transformer having an essentially planar secondary winding structure having good heat dissipation characteristics and including a secondary winding and a diode-connected output connection frame or the like, and a primary winding structure having flat, coplanar primary windings close to the secondary winding structure for tight coupling thereto.

## Claims

1. A transformer comprising
a core structure having at least two spaced apart pole pieces (20, 34; 22, 36) and forming a flux path,
a primary winding structure (16, 18), and
a secondary winding structure (30, 40),
characterised in that
said secondary winding structure comprises
two generally planar electrically conductive winding portions (30, 40) connected together by at least one rectifier unit (D1, D2, D3, D4),
a first one (30) of said conductive winding portions extending adjacent to said pole pieces and located outside said core, and the second one (40) of said conductive winding portions extending through the space between said pole pieces.

2. A transformer as claimed in Claim 1 characterised in that
said secondary winding structure includes two rectifier units (D1, D2; D3, D4) located on opposite sides of said core structure,

one end of said second conductive winding portion (40) is connected to said first conductive portion (30) through one rectifier unit (D1, D2), and the other end of said second conductive winding portion (40) is connected to said first conductive portion (30) through the other rectifier unit (D3, D4).

3. A transformer as claimed in Claim 1 characterised in that said core structure comprises two pairs of spaced apart pole pieces (20, 34; 22, 36), and said second conductive winding portion (40) extends through the space between the pole pieces of each pair,

4. A transformer as claimed in Claim 4 characterised in that said secondary winding structure comprises a third rectifier unit (D3A, D3B) located between said pairs of pole pieces, and connecting said second conductive winding portion to said first conductive winding portion.

5. A transformer as claimed in any one of the preceding claims characterised in that said secondary winding structure comprises a printed circuit board and said two conductive winding portions are formed by the printed circuit on said board.

6. A transformer as claimed in Claim 5 characterised in that said primary winding structure comprises at least winding portion which is located wholly on one side of said printed circuit board, and said secondary winding structure is located wholly on the side of said printed circuit board remote from said primary winding portion.

7. A transformer as claimed in any one of the preceding claims characterised in that said primary winding structure comprises at least one planar winding.

FIG.1

FIG.2

84

84

D1'

D2'

CORE

36'

34'

D3'

D4'

82

82

40'

30'

PRIMARY WINDING
OUTLINE (REF.)

66'

FIG.3

SW

+B

16

18

24,26

D1

D2

40

D3

D4

64

L

90

C

92

66

PWM CONTROL 94

FIG.4

# FIG.5a

TRANSFORMER ASSEMBLY

SW 1

+B

$T_1$

16-1,18-1

D1A,B

40-1

L

SW 2

+B

$T_2$

16-2,18-2

D2A,B

D3A,B

40-2

$R_L$

C

# FIG.5b

$I_{D1A,B}$

$I_{D2A,B}$

$I_{D3A,B}$

FIG.6

FIG.7

112      D1″

S                    F

P2

FIG.9

10                    10

CONDUCTOR

INSULATOR

CONDUCTOR

FIG.10

FIG.8